# DEMANDE DE BREVET EUROPEEN

(11) **EP 4 112 267 A1**
(43) Date de publication de la demande: **04.01.2023**
(21) Numéro de dépôt: 22182399.0
(22) Date de dépôt: 30.06.2022
(51) Int. Cl.: B29C 45/14, B44C 1/17

(54) **PIÈCE DE CARROSSERIE PEINTE COMPORTANT UN MOTIF DÉCORÉ PAR MARQUAGE À CHAUD**

(30) Priorité: 02.07.2021 FR 2107223
(71) Demandeur: Compagnie Plastic Omnium SE, 69007 Lyon (FR)
(72) Inventeur: MOULIN, Gilles, 01150 Sainte-Julie (FR)
(74) Mandataire: LLR

(57) **Abrégé**

L'invention concerne une pièce de carrosserie (10) d'un véhicule automobile comportant au moins une paroi (20) en matière plastique, caractérisée en ce que la paroi (20) est au moins partiellement recouverte par un film coloré (30) comportant un motif (40) découpé dans toute l'épaisseur du film coloré (30), et en ce que la matière plastique non recouverte par le film coloré (30) au niveau du motif (40) comporte un élément de décoration (50).

## Description

L'invention concerne le domaine de l'automobile, plus particulièrement celui de la décoration de pièces de carrosserie en matière plastique, par exemple des pare-chocs avant ou arrière, des toits, des ouvrants de type hayon, coffre ou porte, des grilles, des calandres.

En particulier l'invention concerne une pièce de carrosserie, comportant un élément de décoration, et un procédé de fabrication d'une telle pièce.

Il est souvent nécessaire d'améliorer l'aspect esthétique des pièces de carrosserie afin de les rendre plus attrayantes pour le consommateur, ou pour se différencier de ses concurrents. Plusieurs méthodes sont connues, telles que la peinture, la pose d'un film décoratif adhésif, ou l'impression de motifs, par exemple par marquage à chaud. Le marquage à chaud est une méthode d'impression qui consiste à déposer un film décoratif sur la surface d'une pièce au moyen d'un tampon chaud. Un exemple de méthode et de dispositif permettant l'impression de motif par marquage à chaud est décrit dans le document US 2017/326860.

Cependant, les techniques actuelles de marquage à chaud ne peuvent pas être appliquées à une pièce plastique ayant déjà subie un procédé de peinture. En effet, les peintures, généralement un assemblage d'une base, d'un primaire et d'un vernis, ne permettent pas une fixation efficace et répétable du film décoratif déposé par marquage à chaud.

Afin d'obtenir une surface extérieure de pièce de carrosserie comportant une zone peinte munie d'un film décoratif déposé par marquage à chaud, différentes solutions ont été envisagées.

Par exemple, il est possible de procéder à une opération de marouflage avant de peindre la zone, afin de laisser libre de peinture la zone destinée à recevoir le film décoratif. Cependant cette technique peut conduire à des défauts au niveau de la frontière entre la zone peinte et le film décoratif déposé par marquage à chaud.

Une autre solution envisagée consiste à gratter, par exemple au moyen d'un grattage laser, la peinture, afin que la matière plastique soit directement en contact avec le poinçon de marquage à chaud. Cependant, cette technique n'est pas satisfaisante, car la surface grattée présente des rugosités qui ne donne pas un aspect acceptable après la dépose du film décoratif par marquage à chaud. De plus, là aussi la frontière entre la zone peinte et le film décoratif déposé par marquage à chaud possède des imperfections non admissibles en termes de qualité perçue, car le film décoratif déposé localement sur la zone qui aura eu un grattage laser, recouvrira difficilement avec précision toute cette zone grattée et il pourra subsister des interstices entre la zone de la pièce encore recouverte de peinture et celle recouverte du film décoratif.

Ce problème lié au procédé de marquage à chaud peut également se rencontrer avec d'autres procédés de dépose de films décoratifs non applicables sur une surface peinte, comme le procédé de tampographie par exemple.

L'invention a notamment pour but de remédier à ces inconvénients, en fournissant une pièce de carrosserie en matière plastique, dans laquelle on utilise un film coloré, afin de remplacer la peinture, ce film coloré étant découpé dans toute son épaisseur pour former un motif décoratif. Ainsi, la délimitation de la zone du motif décoratif est nette, sans souci d'imperfection à la frontière grâce à la découpe du film coloré. De plus, la dépose d'un film décoratif au niveau du motif, par exemple par marquage à chaud, ne se fait pas sur la peinture ou sur le film coloré, mais sur la matière plastique des zones découpées du film coloré qui est positionné sur la pièce de carrosserie.

À cet effet, l'invention a pour objet une pièce de carrosserie d'un véhicule automobile comportant au moins une paroi en matière plastique, dans lequel la paroi est au moins partiellement recouverte par un film coloré comportant un motif découpé dans toute l'épaisseur du film coloré, et en ce que la matière plastique non recouverte par le film coloré au niveau du motif comporte un élément de décoration.

La pièce de carrosserie comporte ainsi un motif décoratif couvert d'un élément de décoration qui peut être déposé par un procédé de marquage à chaud. De plus, le motif peut facilement être modifié d'un véhicule à un autre, puisque le motif peut évoluer pour une même forme de pièce de carrosserie.

Enfin, une telle pièce possède une excellente qualité visuelle au niveau de la zone frontière entre le film coloré et le motif décoratif, même une fois marqué à chaud, car le tampon peut être ajusté pour bien couvrir toute la surface du motif décoratif de façon à éviter tout espace libre entre la zone colorée (film coloré) et le film décoratif déposé.

L'invention est également adaptée à des pièces de carrosserie de grande dimension, telles qu'un pare-chocs, une aile, une peau de hayon par exemple, et de façon générale des pièces dont la plus grande dimension peut atteindre 1m, et/ou dont la surface peut atteindre 0,5m².

Suivant d'autres caractéristiques optionnelles de la pièce prises seules ou en combinaison :
- l'élément de décoration est un film décoratif déposé par un procédé de marquage à chaud ;
- le film coloré a une couleur ton caisse et recouvre la paroi sur une zone non peinte ;
- le film coloré est surmoulé sur la paroi ;
- au niveau du motif décoratif, la matière plastique formant la paroi est affleurante avec une surface libre du film coloré ;
- au niveau du motif décoratif, la matière plastique formant la paroi est en saillie d'une surface libre du film coloré ;
- le film coloré est réalisé en un matériau choisi seul ou en combinaison parmi : polycarbonate, polyétherimide, polyethersulfone et polyméthacrylate de méthyle, polyoléfine thermoplastique, polyuréthane thermoplastique, acrylonitrile butadiène styrène, polychlorure de vinyle, polypropylène, polyamide, polycarbonate-polyéthylène, polyéthylène et acrylonitrile butadiène styrène-polycarbonate ;
- l'épaisseur du film coloré est comprise entre 0,1 et 3mm.

L'invention concerne également un procédé de fabrication d'une pièce de carrosserie de véhicule automobile selon l'une des revendications précédentes, dans lequel on réalise les étapes suivantes :
- découpe du motif dans le film coloré ;
- dépôt du film coloré sur une paroi d'une chambre de moulage d'un moule ;
- fermeture du moule et injection d'une matière plastique dans la chambre de moulage afin de surmouler la paroi sur le film coloré ;
- sortie de la pièce du moule ; et
- dépose locale sur la paroi, au niveau du motifs décoratif, d'un élément de décoration.

Un tel procédé permet par exemple d'obtenir un aspect chromé sur large pièce plastique peinte ton-caisse.

De plus, un tel procédé ne nécessite pas nécessairement un relief dans le moule, utilisant ainsi une matrice lisse. On peut ainsi utiliser la même matrice pour une pièce peinte classique (sans motif) et une pièce avec motif (matrice qui doit permettre tout de même de positionner un film à surmouler).

Suivant d'autres caractéristiques optionnelles du procédé prises seules ou en combinaison :
- l'élément de décoration est un film décoratif déposé par un procédé de marquage à chaud ;
- on réalise successivement les étapes suivantes :
   ∘ découpe du motif décoratif dans le film coloré ;
   ∘ dépôt du film coloré sur une paroi d'une matrice du moule;
   ∘ fermeture du moule et injection d'une matière plastique dans une chambre de moulage du moule afin de surmouler la paroi sur le film coloré.
   ∘ sortie de la pièce du moule ; et
   ∘ dépose locale sur la paroi, au niveau du motifs décoratif, du film décoratif par un procédé de marquage à chaud.
- on réalise successivement les étapes suivantes :
   ∘ dépose d'un film pelable sur le film coloré, au moins au niveau d'une zone devant accueillir le motif décoratif ;
   ∘ découpe du motif décoratif dans le film coloré et le film pelable;
   ∘ dépôt du film coloré recouvert du film pelable sur une paroi d'une matrice du moule, le film pelable étant positionné contre la matrice ;
   ∘ fermeture du moule et injection d'une matière plastique dans une chambre de moulage afin de surmouler la paroi sur le film coloré ;
   ∘ sortie de la pièce du moule ;
   ∘ retrait du film pelable de la surface du film coloré ; et
   ∘ dépose locale sur la paroi, au niveau du motifs décoratif, du film décoratif par un procédé de marquage à chaud.
- on réalise successivement les étapes suivantes :
   ∘ dépôt du film coloré sur une paroi d'une matrice du moule ;
   ∘ fermeture du moule et injection d'une matière plastique dans une chambre de moulage afin de surmouler la paroi sur le film coloré ;
   ∘ sortie de la pièce du moule ;
   ∘ découpe du motif décoratif dans le film coloré ; et
   ∘ dépose locale sur la paroi, au niveau du motifs décoratif, du film décoratif par un procédé de marquage à chaud.

### Brève description des figures

L'invention sera mieux comprise à la lecture de la description qui va suivre donnée uniquement à titre d'exemple et faite en se référant aux dessins annexés dans lesquels :
[Fig. 1] la figure 1 illustre un exemple de pièce de carrosserie selon l'invention, comportant une paroi munie de motifs décoratifs.
[Fig. 2] la figure 2 illustre en détail une coupe d'une partie de la paroi d'un exemple de pièce de carrosserie, au niveau du motif, illustrant la superposition de la paroi et du film, ainsi que la découpe du film formant un motif décoratif et laissant libre la paroi en matière plastique.
[Fig. 3] la figure 3 est un ensemble de figures (figures 3A à 3D) illustrant les étapes de fabrication d'un exemple d'un premier mode de réalisation d'une pièce de carrosserie selon l'invention.
[Fig. 4] la figure 4 est un ensemble de figures (figures 4A à 4E) illustrant les étapes de fabrication d'un exemple d'une première variante d'un second mode de réalisation d'une pièce de carrosserie selon l'invention.
[Fig. 5] la figure 5 est un ensemble de figures (figures 5A à 5D) illustrant les étapes de fabrication d'un exemple d'une seconde variante d'un second mode de réalisation d'une pièce de carrosserie selon l'invention .
[Fig. 6] la figure 6 est un ensemble de figures (figures 6A à 6E) illustrant les étapes de fabrication d'un exemple d'un troisième mode de réalisation d'une pièce de carrosserie selon l'invention.;

### Description détaillée

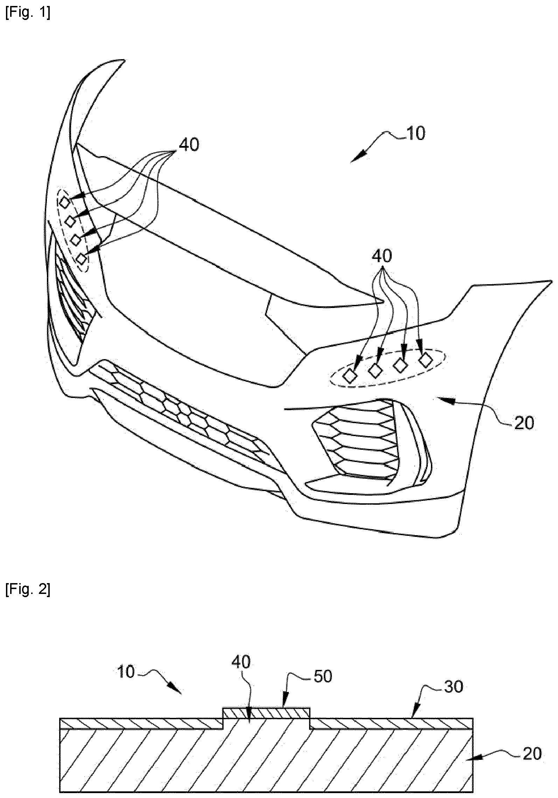

La figure 1 illustre une pièce de carrosserie 10 d'un véhicule automobile comportant une paroi 20 non peinte, munie d'une face externe destinée à être visible depuis l'extérieur du véhicule. Cette paroi 20 est réalisée en matière plastique, de préférence par un procédé de moulage par injection, et elle comporte sur sa face externe un motif décoratif 40 (deux séries de 4 motifs sur l'exemple de la figure 1).

La figure 2 illustre en détail une coupe d'une partie de la paroi 20 au niveau du motif décoratif 40, selon un exemple de réalisation de la pièce de carrosserie 10.

Comme illustré sur la figure 2, la paroi 20 est recouverte par un film coloré 30. Ce film coloré est avantageusement de couleur « ton caisse », de façon à se substituer à la peinture qui devrait être appliquée sur la matière plastique de la paroi 20. Ainsi, le film coloré 30 recouvre la paroi 20 sur une zone non peinte.

Le film coloré 30 est réalisé de préférence en un matériau choisi seul ou en combinaison parmi : polycarbonate (PC), polyétherimide (PEI), polyethersulfone (PES) et polyméthacrylate de méthyle (PMMA), polyoléfine thermoplastique (TPO), polyuréthane thermoplastique (TPU), acrylonitrile butadiène styrène (ABS), polychlorure de vinyle (PVC), polypropylène (PP), polyamide (PA), polycarbonate-polyéthylène (PC/PET), polyéthylène (PET) et acrylonitrile butadiène styrène-polycarbonate (ABS/PC).

L'épaisseur du film coloré 30 est de préférence comprise entre 0,1 et 3mm.

De façon avantageuse, le film coloré 30 est rapporté sur la paroi 20 par surmoulage, au moyen d'un procédé de moulage par injection.

Comme illustré sur la figure 2, selon l'invention, le film coloré 30 comporte au moins un motif décoratif 40 découpé dans toute l'épaisseur du film coloré 30. Ce motif décoratif 40 peut être de toute forme, représentant par exemple une courbe, une forme géométrique telle qu'une ellipse, un rectangle, un triangle, ou encore un logo ou un mot.

Le motif décoratif 40 étant découpé dans toute l'épaisseur du film coloré 30, la matière plastique de la paroi 20 n'est pas recouverte par le film coloré 30 au niveau du motif décoratif 40.

Selon l'invention, le motif décoratif 40 est avantageusement recouvert d'un élément de décoration 50, tel qu'un film décoratif déposé par marquage à chaud. En effet, la technique de marquage à chaud est parfaitement adaptée à la dépose d'un film décoratif local sur une surface issue d'injection de matière plastique.

Trois modes de réalisation sont illustrés sur les figures 2, 3D, 4E, 5D et 6E, et décrits ci-après.

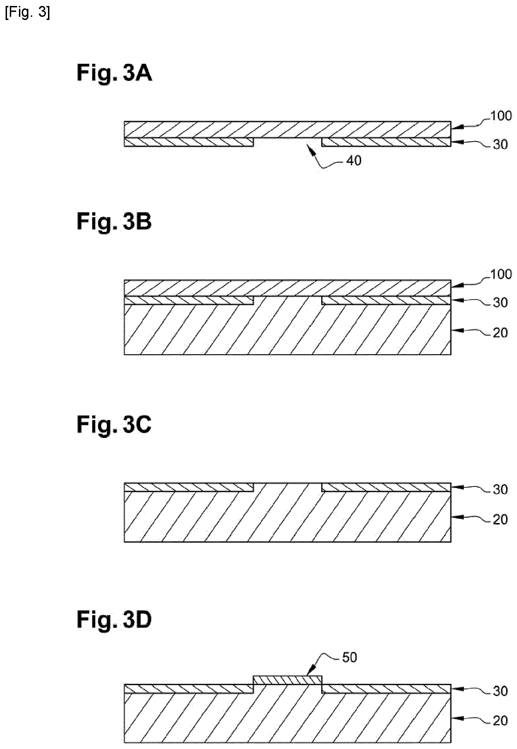

Selon le **premier mode de réalisation** (figures 2 et 3D), la matière plastique formant la paroi 20 est affleurante avec la surface libre (i. e. la surface qui n'est pas en contact avec la paroi 20 - il s'agit de la surface qui est du côté « extérieur » du véhicule) du film coloré 30 dans la zone du motif décoratif 40. La matière plastique de la paroi 20 forme donc une protubérance au niveau de la zone du motif décoratif 40.

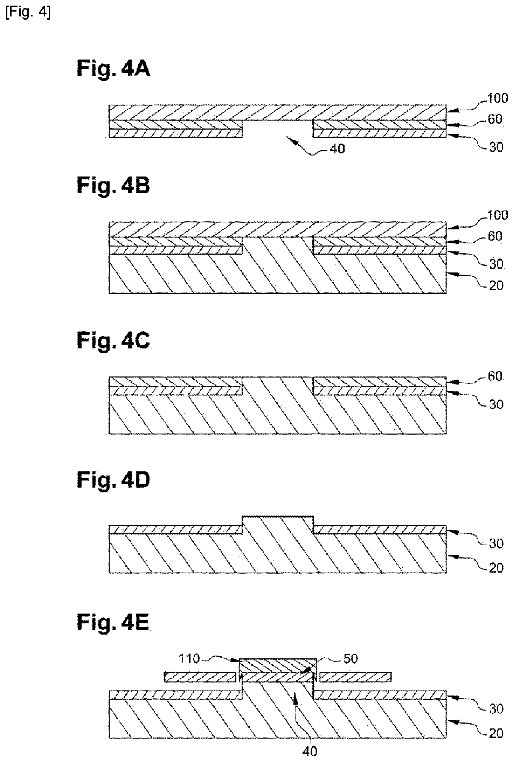

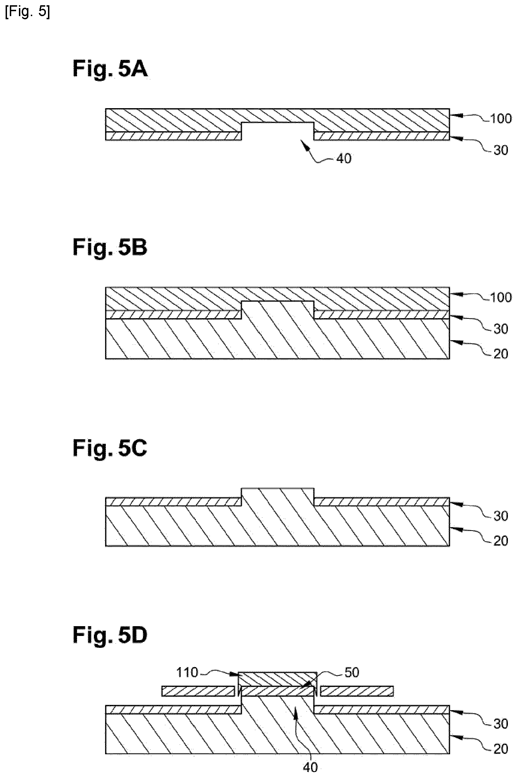

Selon le **second mode de réalisation** (figures 4E et 5D), la matière plastique formant la paroi 20 est en saillie de la surface libre (non en contact avec la paroi 20) du film coloré 30 dans la zone du motif décoratif 40. Ceci est particulièrement avantageux pour éviter que le tampon 110 d'un dispositif de marquage à chaud ne vienne en contact avec le film coloré 30 lors de la fabrication. En effet, un tel contact pourrait endommager ce film coloré 30 et dégrader la qualité perçue de la pièce de carrosserie 10.

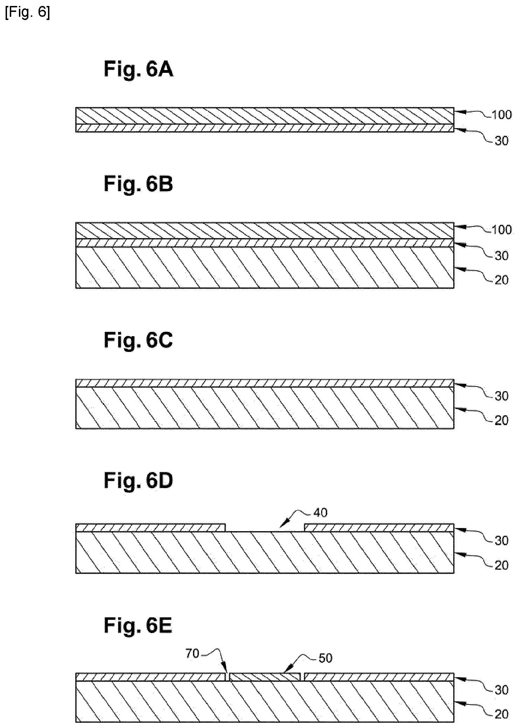

Selon le **troisième mode de réalisation** (figure 6E), la matière plastique formant la paroi 20 est affleurante avec la surface non libre (surface en contact avec la paroi 20) du film coloré 30. La matière plastique n'est donc pas présente dans l'épaisseur du film coloré 30 au niveau du motif décoratif 40.

L'invention concerne également un **procédé de fabrication** d'une pièce de carrosserie 10 de véhicule automobile selon l'invention.

Le procédé selon l'invention comporte les étapes suivantes :
- découpe du motif 40 dans le film coloré 30 ;
- dépôt du film coloré 30 sur une paroi, de préférence lisse, d'une chambre de moulage d'un moule ;
- fermeture du moule et injection d'une matière plastique dans la chambre de moulage afin de surmouler la paroi 20 sur le film coloré 30 ;
- sortie de la pièce 10 du moule ; et
- dépose locale sur la paroi 20, au niveau du motifs décoratif 40, d'un élément de décoration 50.

Selon un mode de réalisation préférentiel, après avoir sorti la pièce 10 du moule, on réalise une étape de marquage à chaud sur la pièce 10 sur la zone du motif 40, de façon à déposer localement un film décoratif (élément de décoration 50), directement sur la paroi 20 au niveau du motif décoratif 40.

Trois modes de réalisation sont illustrés sur les figures 3, 4,5 et 6, et décrits ci-après.

Selon le **premier mode de réalisation** (figure 3), le procédé comporte les étapes successives suivantes :
i- découpe du motif décoratif 40 dans le film coloré 30 ;
ii- dépôt du film coloré 30 sur une paroi, de préférence lisse, de la matrice 100 d'un moule d'injection (figure 3A) ;
iii- fermeture du moule et injection d'une matière plastique dans la chambre de moulage afin de surmouler la paroi 20 sur le film coloré 30 (figure 3B).
iv- sortie de la pièce 10 du moule (figure 3C) ; et
v- dépose locale sur la paroi 20, au niveau du motifs décoratif 40, du film décoratif 50 par un procédé de marquage à chaud (figure 3D).

La pièce de carrosserie comporte ainsi un motif décoratif couvert d'un élément de décoration qui peut être déposé par un procédé de marquage à chaud. De plus, le motif peut facilement être modifié d'un véhicule à un autre, puisque le motif peut évoluer pour une même forme de pièce de carrosserie.

Comme illustré sur la figure 3, une telle pièce possède une excellente qualité visuelle au niveau de la zone frontière entre le film coloré et le motif décoratif, même une fois marqué à chaud, car le tampon peut être ajusté pour bien couvrir toute la surface du motif décoratif de façon à éviter tout espace libre entre la zone colorée (film coloré) et le film décoratif déposé.

Selon une première variante du **second mode de réalisation** (figure 4), le procédé comporte les étapes successives suivantes :
i- dépose d'un film pelable 60 (film temporaire) sur le film coloré 30, au moins au niveau de la zone devant accueillir le motif décoratif 40 ;
ii- découpe du motif décoratif 40 dans le film coloré 30 et le film pelable 60, c'est-à-dire dans toute l'épaisseur de l'ensemble des deux films 30 et 60 ;
iii- dépôt du film coloré 30 recouvert du film pelable 60 sur une paroi, de préférence lisse, de la matrice 100 d'un moule d'injection, le film pelable 60 étant positionné contre la matrice 100 (figure 4A) ;
iv- fermeture du moule et injection d'une matière plastique dans la chambre de moulage afin de surmouler la paroi 20 sur le film coloré 30 (figure 4B).
v- sortie de la pièce 10 du moule (figure 4C) ;
vi- retrait du film pelable 60 de la surface du film coloré 30 (figure 4D) ; et
vii- dépose locale sur la paroi 20, au niveau du motifs décoratif 40, du film décoratif 50 par un procédé de marquage à chaud (figure 4E).

Grâce à ce procédé, la matière plastique formant la paroi 20 est en saillie de la surface libre (non en contact avec la paroi 20) du film coloré 30 dans la zone du motif décoratif 40. Le motif décoratif 40 est ainsi surélevé par rapport au film coloré 30. Ceci est particulièrement avantageux pour éviter que le tampon 110 d'un dispositif de marquage à chaud ne vienne en contact avec le film coloré 30 lors de l'étape de marquage. En effet, un tel tampon comporte généralement des éléments de découpe à sa périphérie (voir figure 4E), qui pourraient endommager le film coloré 30 et dégrader la qualité perçue de la pièce de carrosserie 10.

Le film pelable 60 a une tenue en température supérieure à la température de fusion de la matière plastique injectée.

De plus, cette variante, ne nécessite pas un relief dans le moule, utilisant ainsi une matrice lisse. On peut ainsi utiliser la même matrice pour une pièce peinte classique (sans motif) et une pièce avec motif.

Selon une seconde variante du **second mode de réalisation** (figure 5), on utilise un moule comportant une empreinte (figure 5A) permettant de mouler la paroi 20 avec une surépaisseur au niveau de la zone devant accueillir le motif décoratif 40. Le procédé comporte les étapes successives suivantes :
i- découpe du motif décoratif 40 dans le film coloré 30 ;
ii- dépôt du film coloré 30 sur une paroi de la matrice 100 d'un moule d'injection (figure 5A) ;
iii- fermeture du moule et injection d'une matière plastique dans la chambre de moulage afin de surmouler la paroi 20 sur le film coloré 30 avec une surépaisseur au niveau de la zone devant accueillir le motif décoratif 40 (figure 5B).
iv- sortie de la pièce 10 du moule (figure 5C) ; et
v- dépose locale sur la paroi 20, au niveau du motifs décoratif 40, du film décoratif 50 par un procédé de marquage à chaud (figure 5D).

Grâce à ce procédé, la matière plastique formant la paroi 20 est en saillie de la surface libre (non en contact avec la paroi 20) du film coloré 30 dans la zone du motif décoratif 40. Le motif décoratif 40 est ainsi surélevé par rapport au film coloré 30. Ceci est particulièrement avantageux pour éviter que le tampon 110 d'un dispositif de marquage à chaud ne vienne en contact avec le film coloré 30 lors de l'étape de marquage. En effet, un tel tampon comporte généralement des éléments de découpe à sa périphérie (voir figure 4E), qui pourraient endommager le film coloré 30 et dégrader la qualité perçue de la pièce de carrosserie 10.

Cette variante évite l'utilisation d'un film pelable 60, et donc des étapes de fabrication et un coût de matière.

Selon le **troisième mode de réalisation** (figure 6), le procédé comporte les étapes successives suivantes :
i- dépôt du film coloré 30 sur une paroi, de préférence lisse, de la matrice 100 d'un moule d'injection (figure 6A) ;
ii- fermeture du moule et injection d'une matière plastique dans la chambre de moulage afin de surmouler la paroi 20 sur le film coloré 30 (figure 6B).
iii- sortie de la pièce 10 du moule (figure 6C) ;
iv- découpe du motif décoratif 40 dans le film coloré 30 (figure 6D) ; et
v- dépose locale sur la paroi 20, au niveau du motifs décoratif 40, du film décoratif 50 par un procédé de marquage à chaud (figure 6E).

Ce mode de réalisation facilite la pose et le positionnement du film coloré sur la paroi 20.

A l'étape iv, la découpe du motif décoratif 40 dans le film coloré 30 peut être réalisé par un procédé de découpe laser par exemple.

L'invention n'est pas limitée aux modes de réalisation présentés et d'autres modes de réalisation apparaîtront clairement à l'homme du métier. Il est notamment possible dans les trois modes de réalisation décrits d'utiliser une autre technique que le marquage à chaud pour déposer un autre type d'élément de décoration 50.

### Liste de références

- 10 :: pièce de carrosserie d'un véhicule automobile
- 20 :: paroi de la pièce de carrosserie 10 (issue d'injection de matière plastique)
- 30 :: film coloré
- 40 :: motif décoratif du film coloré 30, découpé dans toute l'épaisseur du film coloré 30
- 50 :: élément de décoration, tel qu'un film décoratif déposé par marquage à chaud
- 60 :: film temporaire/pelable déposé sur le film coloré, et destiné à être contre la paroi de la matrice 100 du moule lors du procédé de fabrication
- 70 :: zone frontière entre l'élément de décoration 50 et le film coloré 30
- 100:: matrice du moule d'injection
- 110 :: tampon d'un dispositif de marquage à chaud

## Revendications

1. **Pièce de carrosserie** (10) d'un véhicule automobile comportant au moins une paroi (20) en matière plastique, **caractérisée en ce que** la paroi (20) est au moins partiellement recouverte par un film coloré (30) comportant un motif (40) découpé dans toute l'épaisseur du film coloré (30), et **en ce que** la matière plastique non recouverte par le film coloré (30) au niveau du motif (40) comporte un élément de décoration (50).

2. Pièce de carrosserie (10) selon la revendication précédente, dans laquelle l'élément de décoration (50) est un film décoratif déposé par un procédé de marquage à chaud.

3. Pièce de carrosserie (10) selon l'une des revendications précédentes, dans laquelle le film coloré (30) a une couleur ton caisse et recouvre la paroi (20) sur une zone non peinte.

4. Pièce de carrosserie (10) selon l'une des revendications précédentes, dans laquelle le film coloré (30) est surmoulé sur la paroi (20).

5. Pièce de carrosserie (10) selon l'une des revendications précédentes, dans laquelle, au niveau du motif décoratif (40), la matière plastique formant la paroi (20) est affleurante avec une surface libre du film coloré (30).

6. Pièce de carrosserie (10) selon l'une des revendications 1 à 4, dans laquelle, au niveau du motif décoratif (40), la matière plastique formant la paroi (20) est en saillie d'une surface libre du film coloré (30).

7. Pièce de carrosserie (10) selon l'une des revendications précédentes, dans laquelle le film coloré (30) est réalisé en un matériau choisi seul ou en combinaison parmi : polycarbonate (PC), polyétherimide (PEI), polyethersulfone (PES) et polyméthacrylate de méthyle (PMMA), polyoléfine thermoplastique (TPO), polyuréthane thermoplastique (TPU), acrylonitrile butadiène styrène (ABS), polychlorure de vinyle (PVC), polypropylène (PP), polyamide (PA), polycarbonate-polyéthylène (PC/PET), polyéthylène (PET) et acrylonitrile butadiène styrène-polycarbonate (ABS/PC).

8. Pièce de carrosserie (10) selon l'une des revendications précédentes, dans laquelle l'épaisseur du film coloré (30) est comprise entre 0,1 et 3mm.

9. **Procédé de fabrication** d'une pièce de carrosserie (10) de véhicule automobile selon l'une des revendications précédentes, **caractérisé en ce que** l'on réalise les étapes suivantes :
- découpe du motif (40) dans le film coloré (30) ;
- dépôt du film coloré (30) sur une paroi d'une chambre de moulage d'un moule ;
- fermeture du moule et injection d'une matière plastique dans la chambre de moulage afin de surmouler la paroi (20) sur le film coloré (30) ;
- sortie de la pièce (10) du moule ; et
- dépose locale sur la paroi (20), au niveau du motifs décoratif (40), d'un élément de décoration (50).

10. Procédé selon la revendication précédente, dans lequel l'élément de décoration (50) est un film décoratif (50) déposé par un procédé de marquage à chaud.

11. Procédé selon l'une des revendications 9 et 10, dans lequel on réalise successivement les étapes suivantes :
- découpe du motif décoratif (40) dans le film coloré (30) ;
- dépôt du film coloré (30) sur une paroi d'une matrice (100) du moule;
- fermeture du moule et injection d'une matière plastique dans une chambre de moulage du moule afin de surmouler la paroi (20) sur le film coloré (30).
- sortie de la pièce (10) du moule ; et
- dépose locale sur la paroi (20), au niveau du motifs décoratif (40), du film décoratif (50) par un procédé de marquage à chaud.

12. Procédé selon l'une des revendications 9 et 10, dans lequel on réalise successivement les étapes suivantes :
- dépose d'un film pelable (60) sur le film coloré (30), au moins au niveau d'une zone devant accueillir le motif décoratif (40) ;
- découpe du motif décoratif (40) dans le film coloré (30) et le film pelable (60);
- dépôt du film coloré (30) recouvert du film pelable (60) sur une paroi d'une matrice (100) du moule, le film pelable (60) étant positionné contre la matrice (100) ;
- fermeture du moule et injection d'une matière plastique dans une chambre de moulage afin de surmouler la paroi (20) sur le film coloré (30) ;
- sortie de la pièce (10) du moule ;
- retrait du film pelable (60) de la surface du film coloré (30) ; et
- dépose locale sur la paroi (20), au niveau du motifs décoratif (40), du film décoratif (50) par un procédé de marquage à chaud.

13. Procédé selon l'une des revendications 9 et 10, dans lequel on réalise successivement les étapes suivantes :
- dépôt du film coloré (30) sur une paroi d'une matrice (100) du moule ;
- fermeture du moule et injection d'une matière plastique dans une chambre de moulage afin de surmouler la paroi (20) sur le film coloré (30) ;
- sortie de la pièce (10) du moule ;
- découpe du motif décoratif (40) dans le film coloré (30) ; et
- dépose locale sur la paroi (20), au niveau du motifs décoratif (40), du film décoratif (50) par un procédé de marquage à chaud.
